# EUROPEAN PATENT APPLICATION

(11) **EP 4 151 987 A1**
(43) Date of publication of application: **22.03.2023**
(21) Application number: 21197306.0
(22) Date of filing: 17.09.2021
(51) Int. Cl.: G01N 21/64, G02B 21/00

(54) **METHOD, DEVICE AND COMPUTER PROGRAM FOR LOCALIZING AND/OR IMAGING LIGHT-EMITTING MOLECULES IN A SAMPLE**

(71) Applicant: Abberior Instruments GmbH, 37077 Göttingen (DE)
(72) Inventor: Schönle, Andreas, 37085 Göttingen (DE); Wurm, Christian, 37077 Göttingen (DE)

(57) **Abstract**

The invention relates to a method, a microscope (1) and a computer program for localizing and/or imaging light-emitting molecules (M) in a sample (S) contained in a sample reservoir (6) comprising illuminating the sample (S) by a light source (2) comprised in or connected to a microscope (100), detecting light emitted by the light-emitting molecules (M) in the sample (S) by a detector (3) comprised in or connected to the microscope (100), wherein the light-emitting molecules (M) comprise a bright state (B) and a dark state (D), determining, based on the detected light (F), a current value of one or more parameters, wherein at least one or the parameters co-depends on the photo-physical or photo-chemical properties of the light-emitting molecules (M) other than their average photon emission rate, and adjusting a composition of a fluid in the sample reservoir (6) to optimize the one or more parameters during the localization or imaging of the light-emitting molecules.

## Description

### Technical area of the invention

The invention relates to a method, a microscope and a computer program for localizing and/or imaging light-emitting molecules in a sample. In particular, the invention may be applied to optimize experimental conditions in super resolution microscopy, more particularly in single molecule localization microscopy techniques such as MINFLUX or PALM/STORM microscopy.

### Prior art

In PALM (photoactivated localization microscopy), STORM (stochastic optical reconstruction microscopy), dSTORM (direct stochastic optical reconstruction microscopy), GSDIM (ground state depletion microscopy followed by individual molecule return) and similar stochastic single molecule localization microscopy techniques, light (e.g., fluorescence light) from single emitters in a sparsely labeled sample is detected by a position-specific detector, such as a camera, to image individual point spread functions (PSFs) of the emitters. The locations of the individual emitters can then be determined from the positions of the PSF maxima, and an image can be constructed from the determined positions. Depending on the number of detected photons, a resolution well below the diffraction limit can be achieved.

In order to detect individual emitters, these methods require that only very few molecules (preferably only a single molecule) are actively emitting photons per diffraction limited volume at a given time. To this end, photo-activatable or photo-switchable fluorophores may be applied, which can be transferred from a dark state, in which the emitter fluorophore remains dark even when irradiated with excitation light to a bright state, in which the emitter emits light in response to excitation light, e.g., by irradiation with activation or switching light of certain wavelengths. Alternatively, conditions may be applied, in which the fluorophores periodically cycle between the active, fluorescent state and the dark state (a phenomenon termed 'blinking').

Conditions (mainly buffer composition and activation / switching light intensity) can be tuned such that only a single emitter or a small number of emitters actively emit photons per diffraction limited volume at high probability.

For example, in a method termed dSTORM, blinking of the emitters can be achieved by a sample buffer containing a mixture of oxidizing and reducing agents combined with oxygen scavengers (so-called ROXS buffer) and by irradiation of the sample with light of a single wavelength serving simultaneously as activating light and excitation light (Heilemann, Angw. Chem. Int. Ed. Engl. 48(37), 6903-6908 (2009), DE 10 2010 035 003 A1).

In the dark state, the emitters that have been used with the ROXS buffer, are particularly present in an anionic radical state. From this conformation, the emitters can enter a long-lived triplet dark state associated with irreversible bleaching.

The reducing agent in the ROXS buffer reduces the emitters from the triplet state back to the charged radical dark state, and thus prevents bleaching. Conversely, the oxidizing agent oxidizes the emitters from the charged radical dark state to the fluorescent singlet state. Therefore, by adjusting the ratio of oxidizing agent and reducing agent, the equilibrium population of the singlet state can be influenced, and specifically, only a small fraction of the emitters can be kept in the active state at a given time, facilitating dSTORM localization with a resolution below the diffraction limit. Additional oxygen scavengers in the ROXS buffer (e.g., enzymatic systems, such as glucose oxidase or an enzyme mix commercially available under the name Oxyrase, L. Nahidiazar et al., J Cell Sci., 128, 3714-3719 (2015)) remove oxygen from the sample environment to control the amount of available oxidizing agent.

Another substance which has been reported to influence the photo-switching behavior of certain fluorescent dyes by formation of covalent adducts is TCEP (phosphine tris (2-carboxyethyl)phosphine). In this manner, the photon emission of two dyes can be adjusted to an equal value, which is favorable for two-color imaging (J.C: Vaughan et al., 'Phosphine Quenching of Cyanine Dyes as a Versatile Tool for Fluorescence Microscopy', J. Am. Chem. Soc. 135(4), 1197-1200 (2013)). It has been further described that total photon counts when using this additive can be increased by the addition of the triplet state quencher COT (cyclooctatetraene) (T. Zhao, 'A user friendly two-color super-resolution localization microscope', Opt. Expr. 23(2), 1879-1887 (2015)).

In GSDIM (ground state depletion with individual molecule return), the emitters are transferred to a relatively long-lived dark triplet state (T1), from which single emitters stochastically return to the singlet ground state (S0). As described in J. Fölling et al., 'Fluorescence nanoscopy by groundstate depletion and single molecule return', Nature Meth. 5(11), 943-945 (2010), the conversion probabilities can be tuned by adapting the chemical environment of the sample, e.g., by embedding the sample in polyvinyl alcohol (PVA), which reduces the mobility of triplet-quenching oxygen or by the addition of triplet state quenchers (e.g., β-mercaptoethanol) or oxygen scavengers (e.g., glucose oxidase).

MINFLUX microscopy (Balzarotti F, Eilers Y, Gwosch KC, Gynnå, A, Westphal V, Stefani F, Elf J, Hell SW 'Nanometer resolution imaging and tracking of fluorescent molecules with minimal photon fluxes', arXiv:1611.03401 [physics.optics] (2016)) is a single molecule localization technique in which a sample containing light-emitting molecules (typically fluorophores) is illuminated by an excitation light focus with a local intensity minimum (e.g., a donut-shaped light distribution, ideally with zero intensity at the center). This local minimum is first placed near an estimated position of a single light-emitting molecule, wherein the position estimate has been obtained by a lower-accuracy method. Using dedicated deflecting devices (typically electro optic deflectors) the local minimum is then moved in a pre-determined pattern with respect to the sample. At each position of the light distribution, photons from the light-emitting molecule are collected, and a new more accurate position estimate is determined from the photon counts and the corresponding positions. Given that the excitation light distribution is sufficiently close to the light-emitting molecule, the obtained photon count is highly dependent on the relative position of the light-emitting molecule with respect to the local intensity minimum: If the emitter is positioned exactly at the minimum, a minimum photon count (ideally zero) is obtained. Radially outside of the minimum, the measured light intensity increases. Using, e.g., least means square algorithms, the position estimate can be obtained from the photon counts and positions. This process can be continued iteratively, wherein the position estimate of the previous iteration is used as a starting value in each case. Given a sufficient signal-to-background ratio, positional accuracies of about 1-10 nm can be obtained by this method. If the process is repeated with different light-emitting molecules, a super-resolution image of the sample can be obtained.

Different 3D implementations of MINFLUX microscopy have also been demonstrated (K.C. Gwosch et al.: 'MINFLUX nanoscopy delivers 3D multicolor nanometer resolution in cells', Nat. Methods 17(2), 217-224 (2020); R. Schmidt et al.: 'MINFLUX nanometer-scale 3D imaging and microsecond-range on a common fluorescence microscope', Nat. Commun. 12(1), 1478-1490 (2021)). Therein, the excitation light distribution is placed with its local minimum on positions forming a 3D pattern around the current position estimate of the light emitting molecule. Axial displacement is typically performed using a varifocal lens or a deformable mirror.

In MINFLUX microscopy, it is important to keep the local concentration of actively light-emitting molecules below a threshold value, so that single molecules may be localized.

Some systems for automatic adjustment of microscopic sample conditions have been described in the prior art.

For example, J. Tam et al., 'A microfluidic platform for correlative live-cell and super-resolution microscopy', PLOS One 9(12): e115512.doi:10.1371/iournal.pone.0115512, describes a microfluidic chip which allows automatic execution of sample preparation (e.g. fixing, staining/labeling) and imaging steps. The system is used to obtain a live-cell image followed by automatic fixation and sequential antibody labeling followed by STORM imaging.

A similar procedure is described in P. Almada et al., 'Automating multimodal microscopy with NanoJ-fluidics', Nature Comm. 10(1), 1223 (2019). Here, syringe pumps were combined with a microscopic sample dish to perform sequential fixing, staining, labeling and imaging steps involving STORM. The syringe pump system can also be used to optimize experimental conditions. Furthermore, the paper describes automatic triggering of the pump system upon detection of morphologic changes of the imaged cells by image recognition.

To provide stable conditions for long-term microscopic measurements, patent application DE 10 2008 058 068 A1 proposes a device and a method for providing a predeterminable concentration of a component in a microscopic sample liquid medium comprising a feeding device for adjusting or controlling the concentration of the component based on measurement data acquired by measuring a predeterminable parameter using a microscopic method. For instance, the predeterminable parameter may be a brightness of a fluorescent label. In particular, the method involves closed-loop control of the concentration of the component.

### Objective problem

In view of the above-described prior art, the objective problem underlying the present invention is to provide an improved method for controlling parameters co-dependent on the photo-physical or photo-chemical properties of light-emitting molecules in a sample in real time during an experiment.

### Solution

This objective is attained by the subject matter of the independent claims 1 (method), 14 (microscope) and 15 (computer program). Embodiments of the invention are specified in sub claims 2 to 13 and described hereafter.

### Description of the invention

A first aspect of the invention relates to a method for localizing and/or imaging light-emitting molecules in a sample contained in a sample reservoir.

The method comprises illuminating the sample by a light source comprised in or connected to a microscope, and detecting light emitted by the light-emitting molecules in the sample by a detector comprised in or connected to the microscope, wherein the light-emitting molecules comprise a bright state, in which the light-emitting molecules emit light in response to being illuminated (e.g., by excitation light) and a dark state, in which the light-emitting molecules do not emit light in response to being illuminated or in which the light-emitting molecules emit less light in response to being illuminated than in the bright state. The method further comprises determining (particularly in real time, during an experiment), based on the detected light, a current value of one or more parameters, wherein at least one of the parameters co-depends on photo-physical or photo-chemical properties of the light-emitting molecules other than their average photon emission rate, and adjusting, particularly automatically, a composition of a fluid in the sample reservoir to optimize the one or more parameters during the localization or imaging of the light-emitting molecules (particularly in real time during the experiment).

Therein, 'optimizing' the one or more parameters means adjusting the parameter to favorable values for imaging or localization. E.g., if the parameter is a blinking rate, this parameter could be optimized, such that a desired density of molecules in the bright state is obtained in a region of interest in the sample to facilitate single molecule localization.

In particular, the light emitting molecules are fluorophores (e.g., fluorescent dye molecules or fluorescent proteins), and the emitted light is fluorescence light, which is emitted in response to illumination with excitation light.

The term 'photo-physical properties', as used herein, describes properties relating to physical processes involving absorption and/or emission of photons by the light-emitting molecules. A 'photo-chemical property', in the meaning used throughout this specification, is any property relating to chemical processes influencing or influenced by the absorption and/or emission of photons. The photo-physical properties and photo-chemical properties on which the at least one parameter co-depends are not simply the average photon emission rate. Thus, e.g., a brightness of the sample, which is directly determined by the average photon emission rate, is excluded from the parameters according to the present invention.

At least one of the parameters co-depends on the photo-physical or photo-chemical properties of the light emitting molecules. In other words, this parameter depends on the photophysical or photo-chemical properties, but may also depend on further properties or parameters, e.g., the spatial density of the molecules.

The light source may be, e.g., a continuous or pulsed laser source. The sample may be illuminated by widefield or focused illumination (as used, e.g., in confocal laser scanning microscopy and MINFLUX microscopy).

The detector may be a point detector (e.g., an avalanche photodiode, APD, a photomultiplier or a hybrid detector) with or without additional electronics for single photon counting and optionally arrival time determination. Alternatively, a position-specific detector, such as an array of APDs or a camera, may be used to detect the emitted light.

Adjusting the composition of the fluid in the sample reservoir may comprise adding and/or removing components of the fluid, e.g., by pump systems. The sample reservoir may be, e.g., a microfluidic cell or a sample dish formed by a cover glass attached to a cover glass holder. In particular, in the latter case, the microscope used to image or localize the light-emitting molecules may be an inverted microscope, in other words, the objective of the microscope may be arranged below the sample reservoir.

The described method has the advantage that sample conditions can be adjusted to optimal values during an experiment, particularly to adjust the number of actively emitting molecules in a diffraction-limited volume in the sample to a desired value. In this manner, it can be ensured that this number is low enough to allow super resolution microscopy (in other words to reduce the resolution or localization accuracy below the diffraction limit), but high enough to speed up the imaging or localization process as much as possible. Since the controlled parameter is independent of the brightness (and thus also on overall effects of photobleaching), the imaging conditions can be more accurately adapted over the course of the experiment.

The term 'diffraction-limited volume' as used in the context of the present specification describes the volume of the point spread function of a point light source.

In certain embodiments, at least one of the parameters is determined by analyzing a time trace of the detected light comprising a plurality of time points from at least one region in the sample. In particular, the emitted light from a field of view in the sample may be detected by a position-specific detector, e.g., a camera, wherein only a small number (e.g., 1 to 5, particularly 1 to 3, more particularly 1 to 2, most particularly one) of the light-emitting molecules in the bright state are present per diffraction limited volume. In particular, the light-emitting molecules are localized by PALM/STORM, dSTORM or GSDIM localization according to this embodiment. In particular, the time trace comprises at least 2 intensity values, more particularly at least 5 intensity values, even more particularly at least 10 intensity values for each light-emitting molecule. In particular, the one or more parameters describe a periodic change of the detected light intensity for each light-emitting molecule or a plurality of the light-emitting molecules, more particularly the one or more parameters comprise a blinking rate or an average blinking rate of the light-emitting molecules.

Importantly, the term 'time trace', as used herein, does not imply any specific time resolution. For instance, recording a time trace of the detected light does not require the determination of photon arrival times (e.g., by a time-correlated single photon counting, TCSPC, module). A time trace may also be recorded, e.g., by simply counting photons or measuring light intensities over time.

In certain embodiments, at least one of the parameters is determined by directly analyzing the arrival times of photons emitted by the light emitting molecules from at least one location in the sample. The arrival times from one location may be determined by a point detector (e.g., a confocal point detector) coupled to evaluation electronics (e.g., a time-correlated single photon counting, TCSPC, module) while scanning the sample with a focus of the excitation light. Alternatively, the arrival times of photons from more than one location may be simultaneously determined, e.g., by a position-specific array detector, wherein evaluation electronics are coupled to the detector elements of the array. Therein, particularly each location contains only one or a few (i.e., 2 to 5, particularly 2 to 3) light-emitting molecules. The one or more parameters may be derived, e.g., from a histogram of the arrival time data. For instance, a periodicity observed in the histogram may be used to determine or estimate a blinking rate of the light-emitting molecule or molecules observed in at the respective location. Furthermore, an average blinking rate may be determined, e.g., from aggregated arrival time data of several locations. The described embodiment may be applied also when the light-emitting molecules change their respective positions (e.g., by diffusion), at least if this change of position is below a pre-set threshold.

In certain embodiments, the one or more parameters comprise a blinking parameter of the light-emitting molecules, wherein particularly the blinking parameter is a blinking rate, an average blinking rate (averaged over a plurality of light-emitting molecules), a ratio between on/off times, a ratio between brightness values, a transition rate between molecular states of the light-emitting molecules, or an average time spent by the light-emitting molecule in the bright state or the dark state. Therein, the term 'blinking parameter' designates a parameter describing a periodic cycling of the light-emitting molecules between the bright state and the dark state. In particular, the blinking rate is a parameter describing how often the light-emitting molecules cycle from the dark state to the bright state or from the bright state to the dark state per unit of time.

In certain embodiments, the one or more parameters are optimized, such that an average number of the light-emitting molecules in the bright state in a diffraction limited volume in the sample equals 0,5 to 2, more particularly 1. This allows single molecule localization with a resolution below the diffraction limit, e.g., by PALM/STORM, dSTORM or GSDIM or related methods or by MINFLUX microscopy.

In certain embodiments, the method comprises a plurality of localization steps or tracking steps, wherein in each localization step, a location of a single light-emitting molecule is determined, particularly at an accuracy of 10 nm or less, and wherein in each tracking step, the position of a moving molecule is recorded, particularly with an accuracy of 40 nm or less, and wherein in case the method comprises the plurality of localization steps, the optimization of the one or more parameters depends on a duration of the localization steps. In case the method comprises the plurality of tracking steps, a trajectory is recorded based on the plurality of tracking steps, wherein the optimization of the one or more parameters depends on a during of the tracking steps and/or a desired length of the recorded trajectory. In this manner, the photo-physical or photo-chemical behavior of the light-emitting molecules can be adapted to the length of the localization steps or tracking steps to optimize the localization or tracking accuracy. For instance, this applies to MINFLUX localization and MINFLUX tracking.

In certain embodiments, the one or more parameters are optimized, such that at least 30%, particularly at least 50%, more particularly at least 70%, even more particularly at least 90% , of the light-emitting molecules stay in the bright state for a time period equal to the combined duration of the localization steps or the desired length of the trajectory. This results in a high probability of the light-emitting molecules being in the bright state for an entire localization or recording of a tracking trajectory, which provides an optimal number of photons for localization or tracking. This is especially advantageous for MINFLUX localization and MINFLUX tracking.

In certain embodiments, the at least one parameter comprises or is an emission lifetime, particularly a fluorescence lifetime, of the light-emitting molecules.

In certain embodiments, the fluid is a buffer solution comprising a buffering agent, wherein particularly the pH of the buffer solution is automatically adjusted to optimize the at least one parameter during the imaging or localization.

In certain embodiments, the fluid, particularly the buffer solution, comprises at least one oxidizing agent and/or at least one reducing agent, wherein a concentration of the oxidizing agent and/or the reducing agent in the fluid or a ratio between the oxidizing agent and the reducing agent in the fluid is adjusted, particularly automatically, to optimize the at least one parameter.

In certain embodiments, the fluid, particularly the buffer solution, comprises an oxygen scavenging agent and/or a triplet state quencher, wherein a concentration of the oxygen scavenging agent or the triplet state quencher in the fluid is automatically adjusted to optimize the at least one parameter during the imaging or localization.

In certain embodiments, a first fluid component is provided in the sample reservoir from a first fluid reservoir and a second fluid component is provided in the sample reservoir from a second fluid reservoir, wherein the composition of the fluid is adjusted by controlling a flow rate of the first fluid component and/or the second fluid component, wherein particularly the flow rate of the first fluid component and/or the second fluid component is controlled according to a concentration gradient, more particularly a pre-set concentration gradient, such that the relative amount of the first fluid component and the second fluid component in the fluid changes over time.

In certain embodiments, the first fluid component and the second fluid component are mixed in a mixing chamber to provide a mixture of the first fluid component and the second fluid component, wherein the mixture is provided in the sample reservoir.

In certain embodiments, a light intensity of activation light illuminating the sample is adjusted to further optimize the one or more parameters during the localization or imaging of the light-emitting molecules, wherein the activation light is adapted to promote a transition of the light-emitting molecules to the bright state.

In certain embodiments, an optimized composition of the fluid and/or an optimized light intensity of activation light illuminating the sample is determined by an artificial intelligence module to achieve an optimal value of the one or more parameters using an artificial intelligence algorithm which has been trained on a training data set comprising measured values of at least one of the parameters and corresponding compositions of the fluid and/or light intensity values.

A second aspect of the invention relates to a microscope for localizing and/or imaging light-emitting molecules in a sample contained in a sample reservoir, wherein the microscope is particularly configured to execute the method according to the first aspect. The microscope comprises a light source which is configured to illuminate a sample comprising light-emitting molecules in a sample reservoir, wherein the light-emitting molecules comprise a bright state, in which the light-emitting molecules emit light in response to being illuminated and a dark state, in which the light-emitting molecules do not emit light in response to being illuminated, or in which the light-emitting molecules emit less light in response to being illuminated than in the bright state.

The microscope further comprises a detector which is configured to detect light emitted by the light-emitting molecules in response to illuminating the sample, a control device, particularly comprising a closed-loop control circuit, configured to determine, based on the detected light, a current value of one or more parameters, wherein at least one of the parameters co-depends on photo-physical or photo-chemical properties of the light-emitting molecules other than their average photon emission rate, and a fluidic device configured to provide a controlled amount of a fluid in the sample reservoir.

The control device is configured to determine, based on the detected light, a current value of the one or more parameters, and control the fluidic device to automatically adjust a composition of the fluid in the sample reservoir to optimize the one or more parameters during the localization or imaging.

In certain embodiments, the control device is further configured to control a light intensity of activation light illuminating the sample to further optimize the one or more parameters during the localization or imaging of the light-emitting molecules, wherein the activation light is adapted to promote a transition of the light-emitting molecules to the bright state. By controlling both the composition of the fluid and the light intensity of activation light, the photo-physical or photochemical properties of the light-emitting molecules can be more precisely tuned.

A third aspect of the invention relates to a computer program comprising instructions configured to cause the microscope according to the second aspect to execute the method according to the first aspect.

Further favorable embodiments of the microscope and the computer program according to the invention have already been mentioned in the context of the method according to the invention.

Further embodiments of the invention may be derived from the claims, the description and the drawings. Therein, the claims are not to be construed in a manner such that only subjects, devices or methods respectively comprising all or none of the features of a sub claim in addition to the features of the independent claims 1, 14 and 15, may be possible embodiments of the invention. In contrast, further embodiments may be drawn from features stated in the description or derivable from the drawings which may be singly or cumulatively applied.

### Short description of the figures

The invention is further elucidated and described hereafter with reference to exemplary embodiments displayed in the figures. These embodiments are non-restrictive examples which are not meant to limit the scope of the invention.
- Fig. 1: shows a microscope according to a first embodiment of the invention;
- Fig. 2: shows a microscope according to a second embodiment of the invention
- Fig. 3: is a schematic illustration of a part of a microscopic sample according to a first example;
- Fig. 4: is a schematic illustration of a part of a microscopic sample according to a second example.

### Description of the figures

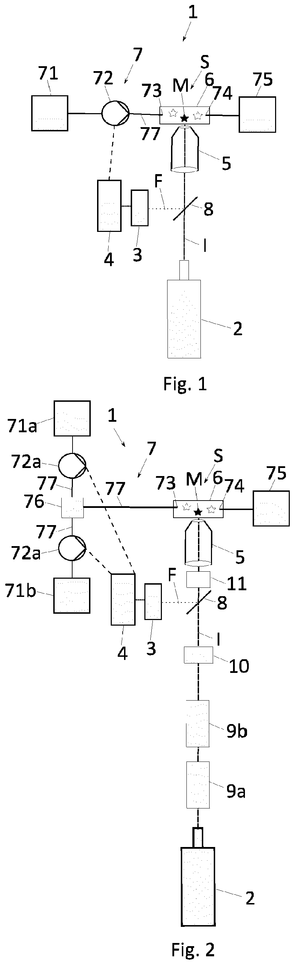

Fig. 1 shows a microscope 1 according to a first embodiment of the invention. The microscope 1 comprises a light source 2, e.g., a laser source, for generating an illumination light beam I to illuminate a sample S in a sample reservoir 6. The illumination light beam I passes a dichroic mirror 8 and is focused by an objective 5 of the microscope 1, either to achieve wide field illumination of the sample S or to generate a focus in or on the sample S (e.g., for scanning microscopy).

The sample S contains molecules M capable of emitting detection light F in response to the illumination light I. In particular, the molecules M may be fluorophores which emit fluorescence light in response to excitation by the illumination light I.

The detection light F is separated from the illumination light I by the dichroic mirror 8 and is detected by the detector 3, which may be a point detector (such as an avalanche photodiode (APD), a photomultiplier or a hybrid detector) or an area detector, such as a camera or an array of point detectors.

The sample reservoir 6 may be limited on its lower end by a cover glass, on which structures of interest (e.g., biological cells) are immobilized, which contain the molecules M to be imaged or localized by microscopy. Alternatively, the sample reservoir 6 may be a microfluidic well or channel in a microfluidic chip. Immobilization, if applicable, may be achieved, e.g., by chemical coupling to a surface of the sample reservoir 6, or by embedding of the structures of interest in a polymer matrix (e.g., PVA).

A medium, such as a sample buffer, covering the structures of interest (or containing the structures of interest in solution or suspension) may be provided in the sample reservoir 6. The medium may be an aqueous solution containing a buffer to maintain a controlled pH value as well as salts (in particular in case living cells are examined), and other additives. To tune the photophysical and/or photo-chemical properties of the molecules (e.g., to achieve a suitable blinking rate for PALM/STORM imaging or MINFLUX microscopy), the medium may, e.g., contain reducing agents, oxidizing agents and/or oxygen scavengers.

The microscope 1 further comprises a fluidic device 7 comprising a fluid reservoir 71, a pump 72, fluid lines 77, a fluid inlet 73 in flow connection with the sample reservoir 6 and an optional fluid outlet 74 connecting the sample reservoir 6 to a waste reservoir 75.

A controlled amount of a fluid stored in the fluid reservoir 71 may be pumped into the sample reservoir 6 by the pump 72. Depending on the amount of added fluid compared to the volume of the sample reservoir 6, it may be necessary to remove fluid from the sample reservoir 6 to maintain a certain fluid level and/or avoid spillage. To this end, the optional fluid outlet 74 may be provided. The fluid outlet 74 may, e.g., be arranged in a sidewall of the sample reservoir 6 at a vertical position above a desired fluid level, or an additional pump (not shown) in the fluid line 77 connecting the fluid outlet 74 to the waste reservoir 75 may be provided to remove a controlled amount of fluid from the sample reservoir 6.

The fluid reservoir 71 may contain a fluid comprising additives that influence one or more parameters, at least one of which co-depends on the photophysical and/or photochemical properties of the molecules M in the sample S, e.g., oxidizing agents, reducing agents, oxygen scavengers and/or triplet state quenchers.

The detector 3 is connected to a control device 4 which evaluates the signal of the detector 3 to determine one or more parameters, wherein at least one of the parameters co-depends on photophysical or photo-chemical properties of the molecules M in the sample. The control device 4 compares the determined value of the one or more parameter to desired values and sends control signals to the fluidic device 7, particularly to the pump 72, such that a controlled amount of the fluid stored in the fluid reservoir 71 flows into the sample reservoir 6. By means of the additives in the fluid, the one or more parameters are influenced. In particular, the control device 4 implements a closed control loop, by which fluid from the fluid reservoir 71 is added to the sample reservoir 6 until the one or more parameter reaches a pre-defined setpoint.

The control device 4 may comprise or consist of hardware or software components. For instance, a personal computer connected to the detector 3 and the pump 72 may serve as a control device 4 using suitable control software. Alternatively, dedicated electronic circuits, such as hardwired electronics, field programmable gate arrays (FPGAs), or application specific integrated circuits (ASICs) may be used as the control device 4.

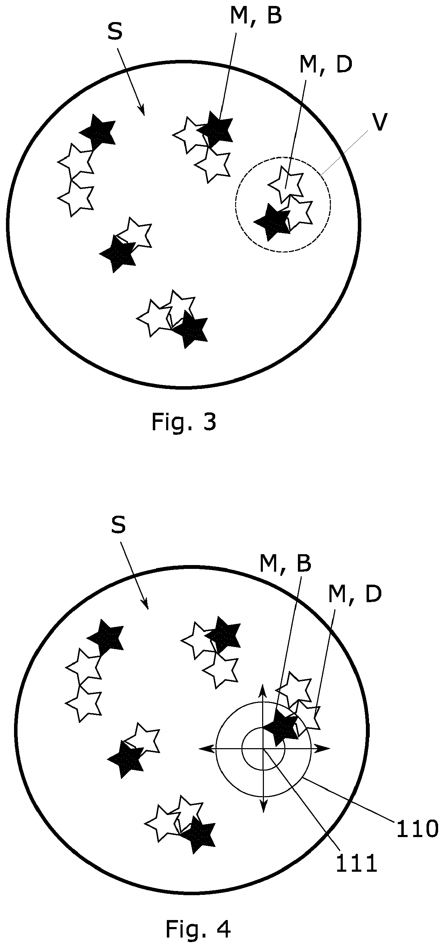

The microscope 1 may be used, e.g., for PALM/STORM or similar microscopy techniques. To this end, the light source 2 and the optical components of the microscope 1 are particularly set up, such that the sample S is uniformly illuminated by the illumination light I (e.g., by widefield illumination), and the detector 3 is particularly a position-specific detector 3, such as a camera comprising a plurality of light-sensitive pixels. If the photophysical and/or photochemical properties of the molecules M are adjusted, such that only one molecule M is in the bright state B in a diffraction-limited volume V in a given time interval (see **Fig. 3**), the position of each of those molecules M may be determined by a processor (not shown) from a positional histogram of the light signals detected by the pixels of the detector 3. Subsequently, further images are obtained, while the molecules M stochastically switch between the dark state D and the bright state B. In this manner, a super-resolution image (that is, an image with a resolution below the diffraction limit) of the molecules M in the sample S can be obtained by the processor.

**Fig. 2** shows a MINFLUX microscope 1 according to a second embodiment of the invention. The microscope 1 comprises a light source 2 configured to generate an illumination light beam I, an objective 5 for focusing the illumination light beam I into or onto a sample S comprising light-emitting molecules M, a dichroic mirror 8 for separating the illumination light I from detection light F emanating from the molecules M in the sample S, a detector 3 for detecting the detection light F, a fluidic device 7 for providing a fluid in a sample reservoir 6 containing the sample S, and a control device 4 for controlling the fluidic device 7. These components may be identical or similar to the components described above in respect of the microscope 1 shown in Fig. 1.

In addition, the MINFLUX microscope 1 comprises a wavefront modulator 10 configured to generate a light distribution 110 of the illumination light I (particularly excitation light) with a local minimum 111 at the focus in the sample S (see **Fig. 4**). For example, the wavefront modulator 10 may be a spatial light modulator comprising a diffraction grating containing a plurality of pixels with adjustable phase values, such that an adjustable phase pattern can be displayed on the diffraction grating or a phase plate with a fixed phase pattern. E.g., to obtain a donut-shaped lightdistribution (as known, e.g., from STED microscopy), a vortex phase pattern can be displayed on the wavefront modulator 10 to phase modulate the illumination light beam I and form the light distribution 110 with the local minimum 111 by interference at the focus.

The MINFLUX microscope 1 further comprises a scanning device 11, e.g., a galvanometric scanner, for coarse scanning of the illumination light beam I over/through the sample S and for de-scanning of the detection light F. Lateral fine scanning of the light distribution 110 through the sample S is achieved by the first deflection device 9a and the second deflection device 9b, which laterally deflect the illumination light beam I with high speed and precision, but a relatively low working range compared to the scanning device 11. In particular, the first deflection device 9a and the second deflection device 9b may be electro optic deflectors (EODs) or acousto optic deflectors (AODs) configured to displace the illumination light beam I in two directions which are perpendicular to the optical axis and perpendicular to each other. Optionally, an axial scanning/focusing device, such as a deformable mirror or a varifocal lens may be applied to move the light distribution 110 in the axial direction, e.g., for 3D MINFLUX (not shown).

During MINFLUX localization, a single light-emitting molecule M in the bright state B is first searched in the field of view (see Fig. 4) and a coarse position estimate of the molecule M is obtained, e.g., as described in the prior art. The local minimum 111 of the light distribution 110 is then moved by the first and second deflection devices 9a,9b (and optionally the axial scanning/focusing device) to positions in the vicinity of the coarse position estimate, and a light intensity or photon count of the detection light F is measured by the detector 3 for each position of the local minimum 111. An improved position estimate is then calculated from the light intensities/photon counts and the corresponding positions, e.g., by a least means square algorithm. This process may be repeated in several iterations to further improve the position estimate, until the estimate converges to an optimal value (influenced by the signal-to-noise ratio) or until the molecule M reversibly or irreversibly switches to the dark state D. This localization process can be also optimized for MINFLUX tracking applications, where the position of moving molecules M is tracked over time.

Optimizing the one or more parameter which co-depends on the photo-physical and photochemical properties of the light-emitting molecules M is important in MINFLUX microscopy and MINFLUX tracking, e.g., to ensure that only one molecule M in the bright state B, and not a closely spaced ensemble of molecules M is localized/tracked with high probability. In addition, the efficiency of MINFLUX localization can be optimized in certain situations by ensuring that the molecules M remain in the bright state B for an entire localization sequence most of the time.

The fluidic device 7 shown in Fig. 2 comprises a first fluid reservoir 71a and a second fluid reservoir 71b, which are connected by respective fluid lines 77 to a mixing chamber 76, which is in turn connected by a respective fluid line 77 to an inlet 73 branching into the sample reservoir 6.

A first pump 72a pumps fluid from the first fluid reservoir 71a into the mixing chamber 76, and a second pump 72b pumps fluid from the second fluid reservoir 71b into the mixing chamber 76. In the mixing chamber 76, a mixture of components of the fluids contained in the first fluid reservoir 71a and the second fluid reservoir 71b is generated. The mixture is then introduced into the sample reservoir 6. Mixing in the mixing chamber 76 may occur passively (i.e., as a result of the flow into and out of the mixing chamber 76 as well as by diffusion) or actively (i.e., by moving elements, such as stirring bars or rotors).

Optionally, an outlet 74 of the sample reservoir 6 is connected to a waste reservoir 75 as described above for the embodiment shown in Fig. 1.

The control device 4 controls the flow rate of the first pump 72a and the second pump 72b. In this manner, in case the first fluid reservoir 71a and the second fluid reservoir 71b contain different components, a desired ratio of those components in the mixture can be controlled by setting appropriate flow rates of the first pump 72a and the second pump 72b. E.g., a certain ratio of an oxidizing agent and a reducing agent in the mixture could be set to control the blinking rate of the molecules to a desired value.

The ratio of the components may be constant or may vary in time. For example, a gradient of components in the first fluid reservoir 71a and the second fluid reservoir 71b may be set by the control device 4 by appropriate control of the flow rates of the first pump 72a and the second pump 72b. Such a gradient may be used, e.g., to optimize imaging/localization conditions.

It should be noted that although the fluidic device 7 with two fluid reservoirs 71a, 71b and two pumps 72a, 72b has been described in connection with the MINFLUX microscope 1 shown in Fig. 2, a use of this fluidic device 7 together with the microscope 1 shown in Fig. 1 is also envisioned. Thereby, e.g., ratios between an oxidizing agent and a reducing agent could be set to optimize PALM/STORM localization. Vice versa, a use of the fluidic device 7 shown in Fig. 1 together with the MINFLUX microscope 1 depicted in Fig. 2 is also envisioned and within the scope of the present invention.

Furthermore, it is noteworthy that the fluidic devices 7 described herein can be used for other applications in addition to adjusting parameters co-depending on the photo-physical and photochemical properties of light-emitting molecules M. For instance, they could be used for automatic fixation, labeling, washing and staining steps as described in the prior art, e.g., sequential labeling with different fluorophores for multicolor imaging.

### List of reference signs

- 1: Microscope
- 2: Light source
- 3: Detector
- 4: Control device
- 5: Objective
- 6: Sample reservoir
- 7: Fluidic device
- 8: Dichroic mirror
- 9a: First deflection device
- 9b: Second deflection device
- 10: Wavefront modulator
- 71: Fluid reservoir
- 71a: First fluid reservoir
- 71b: Second fluid reservoir
- 72: Pump
- 72a: First pump
- 72b: Second pump
- 73: Inlet
- 74: Outlet
- 75: Waste reservoir
- 76: Mixing chamber
- 77: Fluid line
- 110: Illumination light distribution
- 111: Local minimum
- B: Bright state
- D: Dark state
- F: Detection light beam
- I: Illumination light beam
- M: Molecule
- S: Sample
- V: Diffraction-limited volume

## Claims

1. A method for localizing and/or imaging light-emitting molecules (M) in a sample (S) contained in a sample reservoir (6) comprising:
- illuminating the sample (S) by a light source (2) comprised in or connected to a microscope (100),
- detecting light (F) emitted by the light-emitting molecules (M) in the sample (S) by a detector (3) comprised in or connected to the microscope (100), wherein the light-emitting molecules (M) comprise a bright state (B), in which the light-emitting molecules (M) emit light in response to being illuminated and a dark state (D), in which the light-emitting molecules (M) do not emit light in response to being illuminated or in which the light-emitting molecules (M) emit less light in response to being illuminated than in the bright state (B),
- determining, based on the detected light (F), a current value of one or more parameters, wherein at least one of the parameters co-depends on photo-physical or photo-chemical properties of the light-emitting molecules (M) other than their average photon emission rate, and
- adjusting, particularly automatically, a composition of a fluid in the sample reservoir (6) to optimize the one or more parameters during the localization or imaging of the light-emitting molecules (M).

2. The method according to claim 1, **characterized in that** at least one of the parameters is determined by analyzing a time trace of the detected light (F) comprising a plurality of time points from at least one region in the sample (S).

3. The method according to claim 1 or 2, **characterized in that** at least one of the parameters is determined by analyzing the arrival times of photons emitted by the light emitting molecules (M) from at least one location in the sample (S).

4. The method according to one of the preceding claims, **characterized in that** of the one or more parameters comprise a blinking parameter of the light-emitting molecules (M), wherein particularly the blinking parameter is a blinking rate, an on/off time or brightness ratio, a transition rate between molecular states of the light-emitting molecules (M) or an average time spent by the light-emitting molecule (M) in the bright state (B) or the dark state (D).

5. The method according to one of the preceding claims, **characterized in that** the parameters are optimized, such that an average number of the light-emitting molecules (M) in the bright state (B) in a diffraction limited volume (V) in the sample (S) equals 0,5 to 2, more particularly 1.

6. The method according to one of the preceding claims, **characterized in that** the method comprises a plurality of localization steps or tracking steps, wherein in each localization step, a location of a single light-emitting molecule (M) is determined, particularly at an accuracy of 10 nm or less, and wherein in each tracking step, the position of a moving molecule is recorded, particularly with an accuracy of 40 nm or less, and wherein in case the method comprises the localization steps, the optimization of the one or more parameters depends on a duration of the localization steps, and wherein in case the method comprises the tracking steps, a trajectory is recorded, wherein the optimization of the one or more parameters depends on a duration or the tracking steps and/or a desired length of the recorded trajectory.

7. The method according to claim 6, **characterized in that** the one or more parameters are optimized, such that at least 30%, particularly at least 50%, more particularly at least 70%, even more particularly at least 90%, of the light-emitting molecules (M) stay in the bright state (B) for a time period equal to the combined duration of the localization steps or the desired length of the trajectory.

8. The method according to one of the claims 1 to 3, **characterized in that** at least one of the parameters comprises or is an emission lifetime, particularly a fluorescence lifetime, of the light-emitting molecules (M).

9. The method according to one of the preceding claims, **characterized in that** the fluid comprises at least one oxidizing agent and/or at least one reducing agent, wherein a concentration of the oxidizing agent and/or the reducing agent in the fluid or a ratio between the oxidizing agent and the reducing agent in the fluid is adjusted, particularly automatically, to optimize the one or more parameters.

10. The method according to one of the preceding claims, **characterized in that** the fluid comprises an oxygen scavenging agent and/or a triplet state quencher, wherein a concentration of the oxygen scavenging agent or the triplet state quencher in the fluid is automatically adjusted to optimize the one or more parameters.

11. The method according to one of the preceding claims, **characterized in that** a first fluid component is provided from a first reservoir (71a) and a second fluid component is provided from a second fluid reservoir (71b), wherein the composition of the fluid is adjusted by controlling a flow rate of the first fluid component and/or the second fluid component, wherein particularly the flow rate of the first fluid component and/or the second fluid component is controlled according to a pre-set concentration gradient, such that the relative amount of the first fluid component and the second fluid component in the fluid changes over time.

12. The method according to one of the preceding claims, **characterized in that** a light intensity of activation light illuminating the sample (S) is adjusted to further optimize the one or more parameters during the localization or imaging of the light-emitting molecules (M), wherein the activation light is adapted to promote a transition of the light-emitting molecules (M) to the bright state (B).

13. The method according to one of the preceding claims, **characterized in that** an optimized composition of the fluid and/or an optimized light intensity of activation light illuminating the sample (S) is determined by an artificial intelligence module to achieve an optimal value of the one or more parameters using an artificial intelligence algorithm which has been trained on a training data set comprising measured values of at least one of the parameters and corresponding compositions of the fluid and/or light intensity values.

14. A microscope (1) for localizing and/or imaging light-emitting molecules (M) in a sample (S) contained in a sample reservoir (6), particularly wherein the microscope (1) is configured to execute the method according to one of the claims 1 to 13, comprising
- a light source (2) configured to illuminate a sample (S) comprising light-emitting molecules (M), wherein the light-emitting molecules (M) comprise a bright state (B), in which the light-emitting molecules (M) emit light in response to being illuminated and a dark state (D), in which the light-emitting molecules (M) do not emit light in response to being illuminated or in which the light-emitting molecules (M) emit less light in response to being illuminated than in the bright state (B),
- a detector (3) configured to detect light emitted by the light-emitting molecules (M),
- a control device (4) configured to determine, based on the detected light (F), a current value of one or more parameters, wherein at least one of the parameters co-depends on photo-physical or photo-chemical properties of the light-emitting molecules (M) other than their average photon emission rate, and
- a fluidic device (7) configured to provide a controlled amount of a fluid in the sample reservoir (6),
**characterized in that**
- the control device (4) is configured to determine a current value of the one or more parameters based on the detected light (D) and control the fluidic device (7) to adjust a composition of the fluid in the sample reservoir (6) to optimize the one or more parameters during the localization or imaging of the light-emitting molecules (M), wherein particularly the control device (4) is further configured to control a light intensity of activation light illuminating the sample (S) to further optimize the one or more parameters during the localization or imaging of the light-emitting molecules (M), wherein the activation light is adapted to promote a transition of the light-emitting molecules (M) to the bright state (B).

15. A computer program comprising instructions configured to cause the microscope (1) according to claim 14 to execute the method according to one of the claims 1 to 13.
